# EUROPEAN PATENT APPLICATION

(11) **EP 2 857 816 A1**
(43) Date of publication of application: **08.04.2015**
(21) Application number: 12877151.6
(22) Date of filing: 25.05.2012
(51) Int. Cl.: G01L 1/18, G01L 1/22

(54) **MECHANICAL-QUANTITY MEASURING DEVICE**

(71) Applicant: Hitachi, Ltd., Chiyoda-ku, Tokyo 100-8280 (JP)
(72) Inventor: ASHIDA, Kisho, Chiyoda-ku, Tokyo 100-8280 (JP); OHTA, Hiroyuki, Chiyoda-ku, Tokyo 100-8280 (JP); SHIMADU, Hiromi, Chiyoda-ku, Tokyo 100-8280 (JP); KASAI, Kenichi, Chiyoda-ku, Tokyo 100-8280 (JP)
(74) Representative: Beetz & Partner mbB
(86) International application number: PCT/JP2012/063540
(87) International publication number: WO 2013/175636

(57) **Abstract**

A load cell including sensor chip (1) on which plural resistive elements rectangular in a plan view are formed, and a member (2) is provided on a front surface side of a semiconductor substrate made of silicon single crystal. The member (2) includes a load portion (3), a fixed pedestal portion (4), and a strain generation portion (5) that is spaced apart from the load portion (3) and the fixed pedestal portion (4), and arranged between the load portion (3) and the fixed pedestal portion (4). The sensor chip (1) is attached onto a front side surface (2a) of the strain generation portion (5) of the member (2) so that a <100> direction of the silicon single crystal in the semiconductor substrate is parallel to a load direction, and a longitudinal direction of the plural resistive elements has an angle of 45° with respect to a load direction.

## Description

### Technical Field

The present invention relates to a mechanical quantity measuring device, and more particularly to a technique effectively applied to a mechanical quantity measuring device that measures a load with the use of a semiconductor strain sensor.

### Background Art

A load cell (a sensor that detects a load (applied force), an element that converts the load into an electric signal, a load converter that converts the load into the electric signal) used for various load measuring devices (scale, weight scale, etc.) is formed of a S-shaped member including a load portion for receiving the load, a strain generation portion that is deformed with the application of the load, and a fixed pedestal portion for fixing the load portion and the strain generation portion.

For example, JP-A-2006-3295 (PTL 1) discloses an S-shaped load cell in which strain gauges (mechanical sensors for measuring a bending strain) are stuck onto respective two places (four in total) of a front surface and a rear surface of the strain generation portion to estimate a strain value from the measured strain value.

Also, JP-A-03-146838 (PTL 2) discloses a load cell using an S-shaped ceramic strain generation body in which a strain gauge is stuck onto a side surface of a strain generation portion through amorphous glass coating.

### Citation List

### Patent Literature

PTL 1: JP-A-2006-3295
PTL 2: JP-A-Hei 03(1991)-146838

### Summary of Invention

### Technical Problem

As a method for measuring a strain or a stress of a structure, there is generally applied a strain gauge (an element for detecting a strain which is a mechanical fine change amount as an electric signal). The strain gauge is of a structure in which a wiring pattern formed of a metal thin film made of a cupper (Cu)-nickel (Ni) based alloy or a nickel (Ni)-chromium (Cr) based alloy is formed on a polyimide film or an epoxy resin film, and a leader line is connected to the wiring pattern, the strain gauge is attached to an object to be measured through an adhesive in use. The strain gauge can measure a strain of the object to be measured according to a change in a resistance value attributable to a deformation of the metal thin film.

However, a semiconductor strain sensor that can measure the strain of the object to be measured with higher precision than that of the strain gauge has been increasingly developed. The semiconductor strain sensor is an element using not the metal thin film, but a semiconductor piezoresistance made of semiconductor, for example, silicon (Si) doped with impurities, for detection of the strain of the object to be measured. The semiconductor strain sensor is tens of times larger in change ratio of a resistance value to the strain of the object to be measured than the strain gauge, and can measure the strain of the fine object to be measured.

Also, in the strain gauge, because a change in the resistance value is small, an external amplifier for amplifying the obtained electric signal is required. On the other hand, in the semiconductor strain sensor, because the change in the resistance value is large, it is not always necessary to amplify the obtained electric signal, and the semiconductor strain sensor can be used without the use of the external amplifier. Also, because an amplifier circuit can be produced on a semiconductor chip configuring the semiconductor strain sensor, it is expected to largely spread the intended purpose or the convenience of use of the semiconductor strain sensor.

The present inventors have developed a load cell formed of an S-shaped member in which the semiconductor strain sensor is attached (bonded) onto one side surface of the strain generation portion. However, in this load cell, the deformation of one side surface of the strain generation portion to which is the semiconductor strain sensor is attached is suppressed by the semiconductor strain sensor with high rigidity. For that reason, the deformation of one side surface of the strain generation portion to which the semiconductor strain sensor is attached is different from the deformation of the other side surface (a side surface opposite to one side surface) of the strain generation portion to which the semiconductor strain sensor is not attached, and both of the side surfaces of the strain generation portion are asymmetrically deformed. Further, when the deformation becomes asymmetrical between both of the side surfaces of the strain generation portion, the position of a load point is deviated from a center thereof, and a load estimation precision of the load cell is reduced.

Also, even if the same load is applied, a shear strain to be measured largely fluctuates due to a variation in the position at which the semiconductor strain sensor is attached, and the load estimation precision of the load cell is reduced.

An object of the invention is to provide a technique in which the load estimation precision can be inhibited from being reduced in the mechanical quantity measuring device using a load cell where a semiconductor strain sensor is bonded to an S-shaped member.

The above and other objects and novel features will become apparent from the description of the present specification and the attached drawings.

### Solution to Problem

An outline of a typical feature of the invention disclosed in the present application will be described in brief below.

The invention is directed to a mechanical quantity measuring device having a load cell formed of a sensor chip on which plural resistive elements rectangular in a plan view are formed, and a member on a surface side of a semiconductor substrate made of silicon single crystal. The member includes a load portion, a fixed pedestal portion, and a strain generation portion that is spaced apart from the load portion and the fixed pedestal portion, and arranged between the load portion and the fixed pedestal portion. The sensor chip is attached onto a side surface of the strain generation portion of the member so that a <100> direction of the silicon single crystal in the semiconductor substrate is parallel to a load direction, and a longitudinal direction of the plural resistive elements has an angle of 45° with respect to a load direction.

### Advantageous Effects of Invention

Advantages obtained by the typical feature of the invention disclosed in the present application will be described in brief below.

In a mechanical quantity measuring device using a load cell in which a semiconductor strain sensor is bonded to an S-shaped member, a reduction in the load estimation precision can be suppressed.

### Brief Description of Drawings

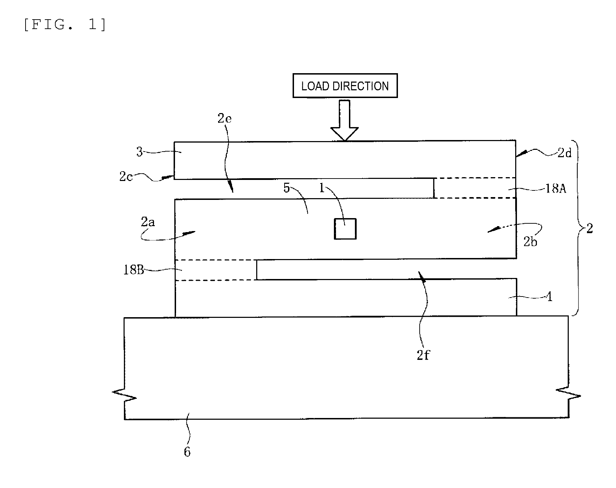

[FIG. 1] FIG. 1 is a side view illustrating a main portion of a front side surface of a load cell studied by the present inventors. Specifically, FIG. 1 is a side view illustrating a main portion of one side surface (front side surface) of the load cell to which a semiconductor strain sensor is attached, and exemplifies the load cell when the semiconductor strain sensor is attached to a strain generation portion to completely hold a lower surface (bottom surface) of a fixed pedestal portion, and a load is applied to a center of an upper surface of a load portion.

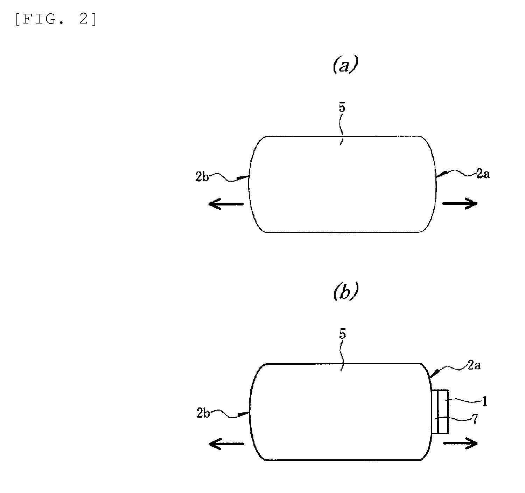

[FIG. 2] FIG. 2 is a cross-sectional view illustrating a main portion of a strain generation portion of the load cell studied by the present inventors. FIG. 2A is a cross-sectional view (a cross-sectional view along a direction from the front side surface to a rear side surface) illustrating a main portion of the strain generation portion of the load cell where the semiconductor strain sensor is not attached to the front side surface and the rear side surface of the strain generation portion. FIG. 2B is a cross-sectional view (a cross-sectional view along a direction from the front side surface to the rear side surface) illustrating a main portion of the strain generation portion of the load cell where the semiconductor strain sensor is attached to one side surface (front side surface) of the strain generation portion.

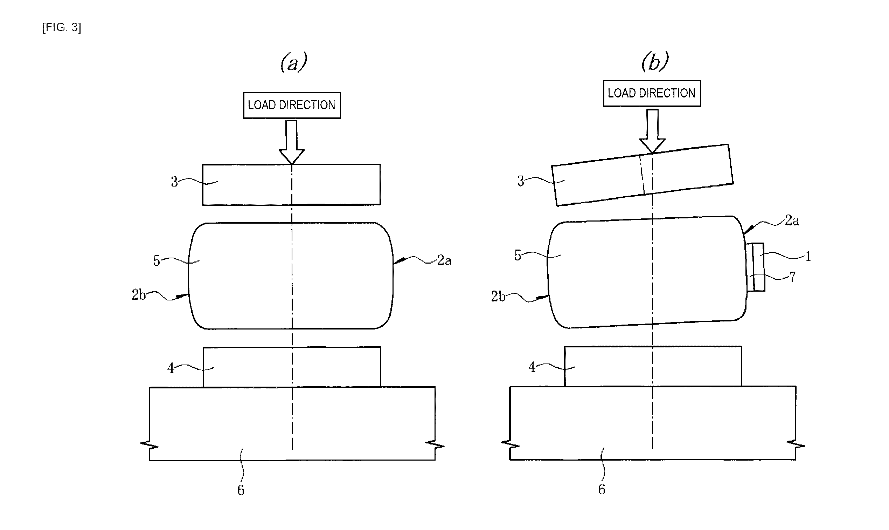

[FIG. 3] FIG. 3 is a cross-sectional view illustrating a main portion of a load portion, the strain generation portion, and a fixed pedestal portion of the load cell studied by the present inventors. FIG. 3A is a cross-sectional view (a cross-sectional view along a direction from the front side surface to the rear side surface) illustrating a main portion of the load portion, the strain generation portion, and the fixed pedestal portion of the load cell where the semiconductor strain sensor is not attached to the front side surface and the rear side surface of the strain generation portion. FIG. 3B is a cross-sectional view (a cross-sectional view along a direction from the front side surface to the rear side surface) illustrating a main portion of the load portion, the strain generation portion, and the fixed pedestal portion of the load cell where the semiconductor strain sensor is attached to one side surface (front side surface) of the strain generation portion.

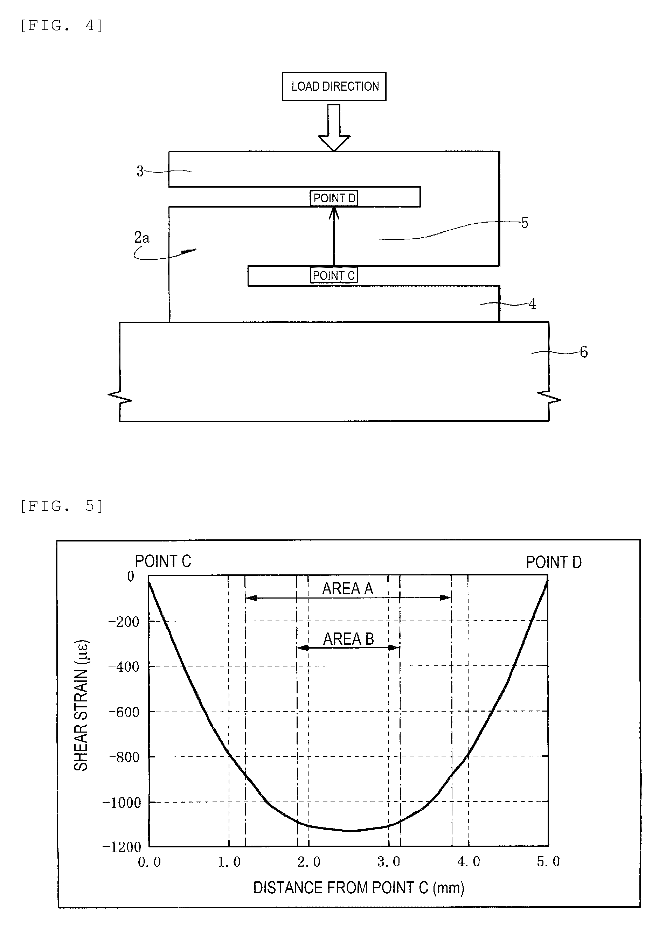

[FIG. 4] FIG. 4 is a side view illustrating a main portion of a front side surface of the load cell studied by the present inventors in which a lower surface (bottom surface) of the fixed pedestal portion is completely held, and a load is applied to a center of an upper surface of the load portion.
[FIG. 5] FIG. 5 is a graph illustrating a shear strain in the front side surface of the strain generation portion obtained by an FEM analysis in a structure where the semiconductor strain sensor is attached to the front side surface of the strain generation portion.

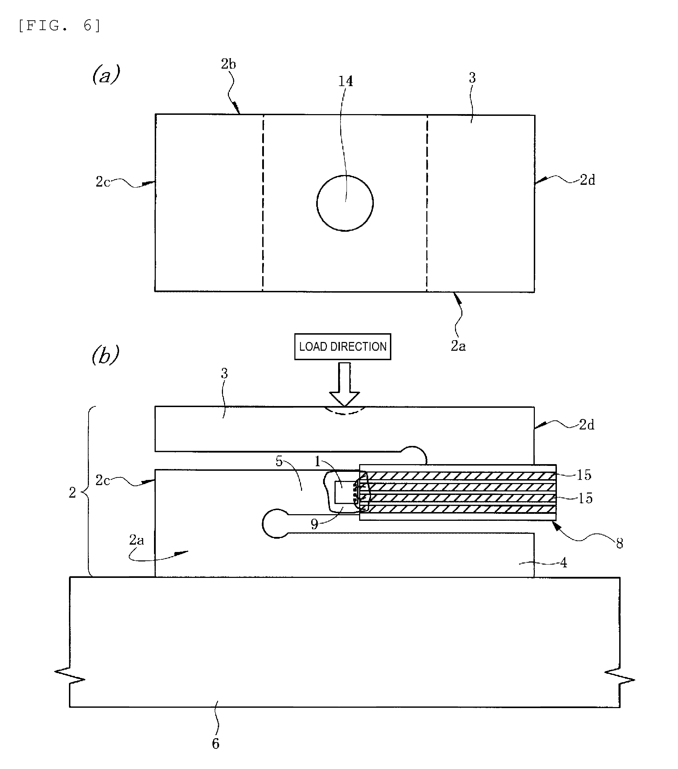

[FIG. 6] FIG. 6A is a top view illustrating a main portion of a top surface of the load cell according to the first embodiment. FIG. 6B is a side view illustrating a main portion of the front side surface of the load cell according to the first embodiment. Specifically, FIG. 6B is a side view illustrating a main portion of one side surface (front side surface) of the load cell to which the semiconductor strain sensor is attached, which exemplifies the load cell when the semiconductor strain sensor is attached to the strain generation portion to completely hold a lower surface (bottom surface) of the fixed pedestal portion, and a load is applied to the center of the upper surface of the load portion.

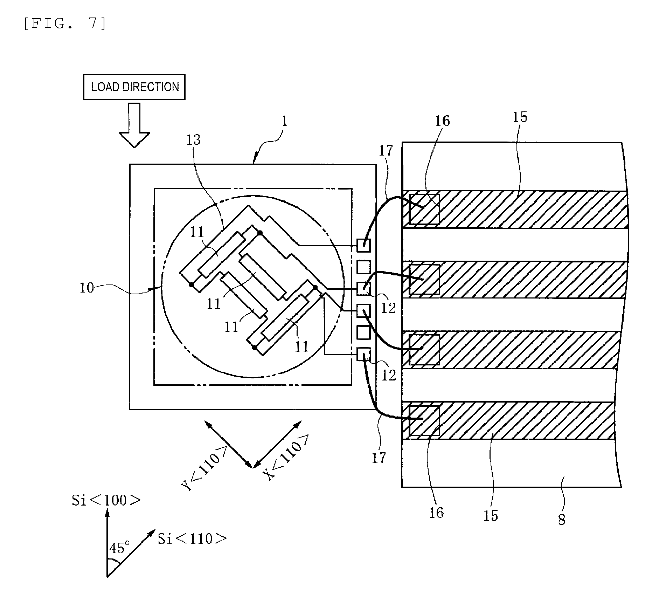

[FIG. 7] FIG. 7 is a plan view schematically illustrating a main portion of a configuration of the semiconductor strain sensor attached to a front side surface of the load cell, and a configuration of a neighborhood to the semiconductor strain sensor according to the first embodiment.

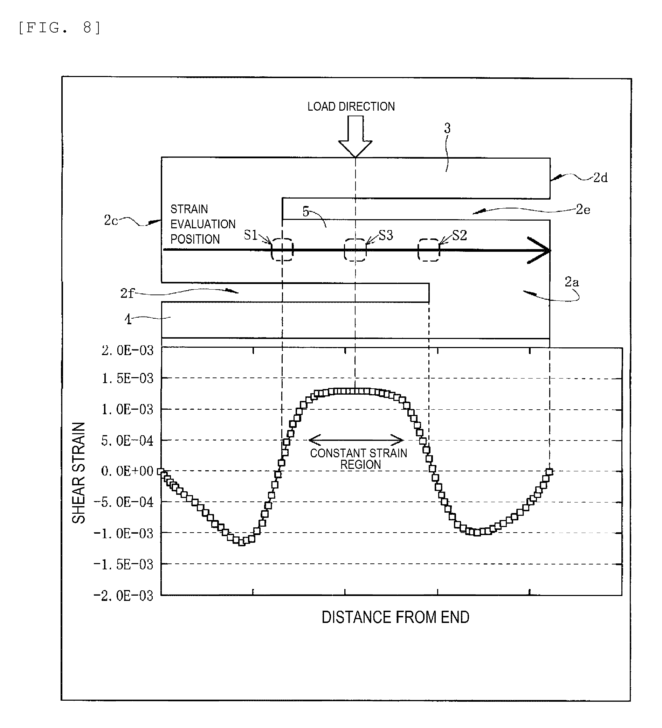

[FIG. 8] FIG. 8 is a graph illustrating a shear strain distribution of a front side surface of the strain generation portion obtained by an FEM analysis according to the first embodiment.

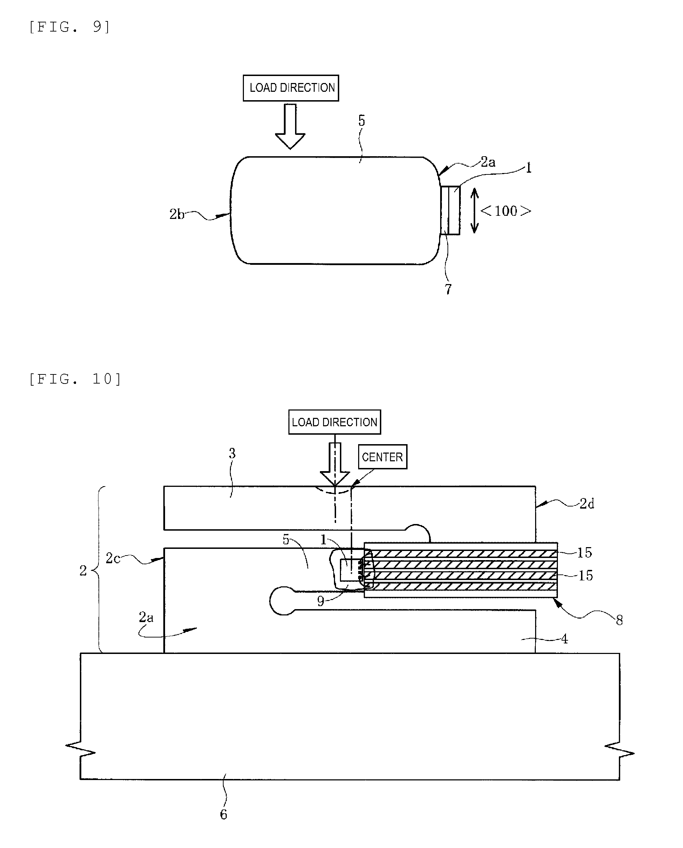

[FIG. 9] FIG. 9 is a cross-sectional view (a cross-sectional view along a direction from the front side surface to the rear side surface) illustrating a main portion of the strain generation portion of the load cell in which the semiconductor strain sensor is attached to one side surface (front side surface) of the strain generation portion according to the first embodiment.
[FIG. 10] FIG. 10 is a side view illustrating a main portion of a front side surface of the load cell according to the first embodiment. Specifically, FIG. 10 is a side view illustrating a main portion of one side surface (front side surface) of the load cell to which the semiconductor strain sensor is attached, which exemplifies the load cell when the semiconductor strain sensor is attached to the strain generation portion to completely hold a lower surface (bottom surface) of the fixed pedestal portion, and a load is applied to a position deviated from the center of the upper surface of the load portion.

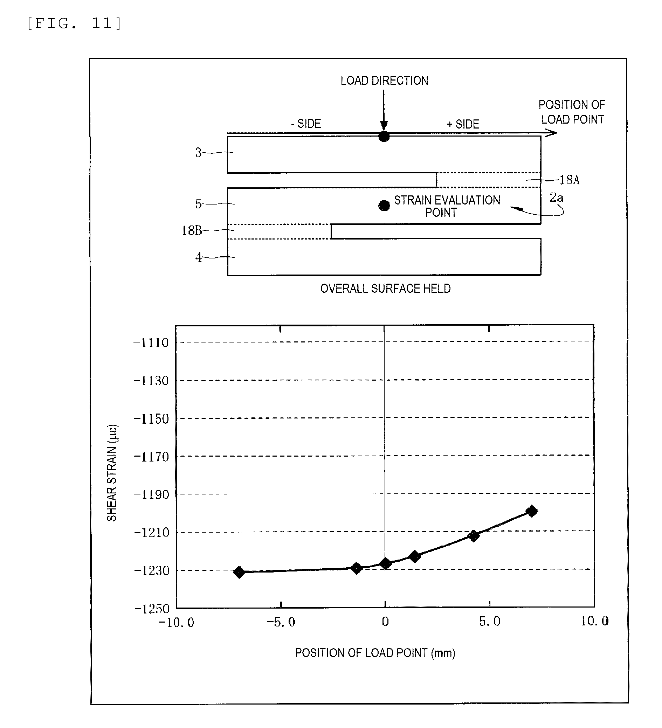

[FIG. 11] FIG. 11 is a graph illustrating a relationship between a position of a load point and a shear strain obtained in the semiconductor strain sensor that is attached to the center portion of one side surface (front side surface) of the strain generation portion according to the first embodiment.

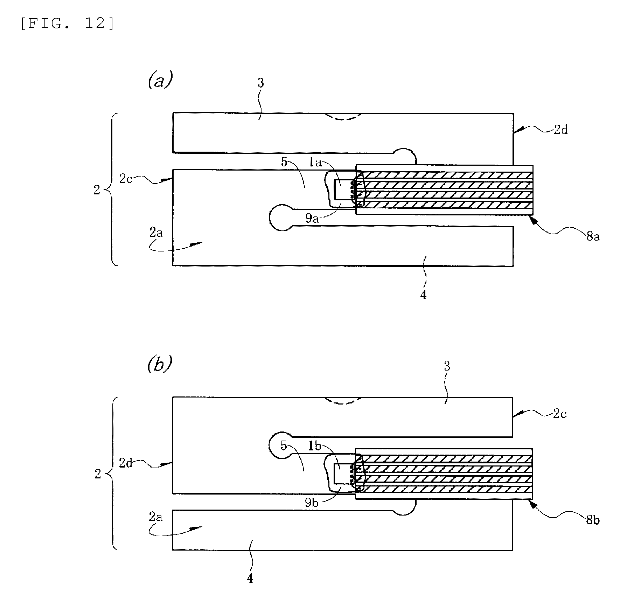

[FIG. 12] FIG. 12A is a side view illustrating a main portion of a front side surface of a load cell to which a semiconductor strain sensor is attached according to a second embodiment, and FIG. 12B is a side view illustrating a main portion of a rear side surface of the load cell to which the semiconductor strain sensor is attached according to the second embodiment.

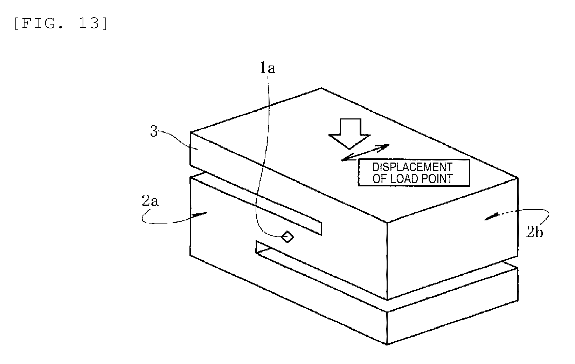

[FIG. 13] FIG. 13 is a perspective view illustrating the load cell according to the second embodiment.

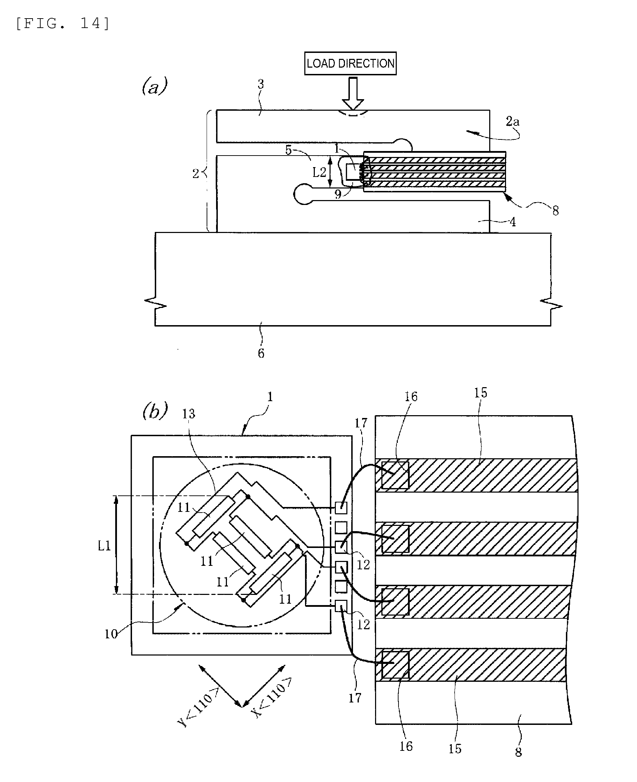

[FIG. 14] FIG. 14A is a side view illustrating a main portion of a front side surface of a load cell according to a third embodiment. Specifically, FIG. 14A is a side view illustrating a main portion of one side surface (front side surface) of the load cell to which a semiconductor strain sensor is attached, which exemplifies the load cell when the semiconductor strain sensor is attached to the strain generation portion to completely hold a lower surface (bottom surface) of a fixed pedestal portion, and a load is applied to a center of an upper surface of a load portion. FIG. 14B is a plan view schematically illustrating a main portion of a configuration of the semiconductor strain sensor attached to a front side surface of the load cell, and a configuration of a neighborhood to the semiconductor strain sensor according to the third embodiment.

### Description of Embodiments

In the embodiments described below, the invention will be described in a plurality of sections or embodiments when required as a matter of convenience. However, these sections or embodiments are not irrelevant to each other unless otherwise stated, and the one relates to the entire or a part of the other as a modification example, details, or a supplementary explanation thereof.

Also, in the embodiments described below, when referring to the number of elements (including number of pieces, values, amount, range, and the like), the number of the elements is not limited to a specific number unless otherwise stated or except the case where the number is apparently limited to a specific number in principle. The number larger or smaller than the specified number is also applicable. Further, in the embodiments described below, it goes without saying that the components (including element steps) are not always indispensable unless otherwise stated or except the case where the components are apparently indispensable in principle. Also, even when mentioning that constituent elements or the like are "made of A" or "comprise A" in the embodiments below, elements other than A are not excluded except the case where it is particularly specified that A is the only element. Similarly, in the embodiments described below, when the shape of the components, positional relation thereof, and the like are mentioned, the substantially approximate and similar shapes and the like are included therein unless otherwise stated or except the case where it can be conceived that they are apparently excluded in principle. The same goes for the numerical value and the range described above.

Further, in the drawings used in the embodiments, hatching is used in some cases even in a plan view so as to make the drawings easy to see. In all the drawings for illustrating the embodiments described below, parts having the same functions are denoted by like reference numerals in principle, and a repetitive description will be omitted. Embodiments of the invention will be described in detail with reference to the drawings.

First, in order to more clearly understand a structure of a load cell according to the embodiments of the invention, various technical problems of a load cell prior to the application of the invention, which has been studied by the present inventors, will be described in detail.

The load cell mainly includes a member to which a load is applied (on which the load acts, or which receives the load), and a semiconductor strain sensor. In the following description of the embodiments, among the respective surfaces of the member configuring the load cell, a surface to which the load is applied is called "upper surface", a surface opposite to the upper surface is called "lower surface (bottom surface)", a surface (chip mounting surface) to which a sensor chip is attached is called "front side surface", and a side surface opposite to the front side surface is called "rear side surface".

### (1) First Problem

A first problem will be described with reference to FIGS. 1 to 3. FIG. 1 is a side view illustrating a main portion of a front side surface of a load cell. Specifically, FIG. 1 is a side view illustrating a main portion of one side surface (front side surface) of the load cell to which a semiconductor strain sensor is attached, and exemplifies the load cell when the semiconductor strain sensor is attached to a strain generation portion to completely hold a lower surface (bottom surface) of a fixed pedestal portion, and a load is applied to a center of an upper surface of a load portion. FIG. 2A is a cross-sectional view (a cross-sectional view along a direction from the front side surface to a rear side surface) illustrating a main portion of the strain generation portion of the load cell where the semiconductor strain sensor is not attached to the front side surface and the rear side surface of the strain generation portion. FIG. 2B is a cross-sectional view (a cross-sectional view along a direction from the front side surface to the rear side surface) illustrating a main portion of the strain generation portion of the load cell where the semiconductor strain sensor is attached to one side surface (front side surface) of the strain generation portion. FIG. 3A is a cross-sectional view (a cross-sectional view along a direction from the front side surface to the rear side surface) illustrating a main portion of the load portion, the strain generation portion, and the fixed pedestal portion of the load cell where the semiconductor strain sensor is not attached to the front side surface and the rear side surface of the strain generation portion. FIG. 3B is a cross-sectional view (a cross-sectional view along a direction from the front side surface to the rear side surface) illustrating a main portion of the load portion, the strain generation portion, and the fixed pedestal portion of the load cell where the semiconductor strain sensor is attached to one side surface (front side surface) of the strain generation portion.

As illustrated in FIG. 1, when a load is applied to a load portion 3, a compression force is slightly generated in a vertical direction (load applying direction, load direction) of a strain generation portion 5. As a result, as illustrated in FIGS. 2A and 2B, a front side surface 2a and a rear side surface 2b of the strain generation portion 5 are deformed, and the front side surface 2a and the rear side surface 2b of the strain generation portion 5 are shaped to protrude outward (directions indicated by arrows in the figure).

In this example, when a sensor chip 1 which is a semiconductor strain sensor is not attached to the load cell, as illustrated in FIG. 2A, the front side surface 2a and the rear side surface 2b of the strain generation portion 5 are symmetrically deformed outward. On the contrary, when the sensor chip 1 is attached to one side surface (front side surface 2a) of the strain generation portion 5, as illustrated in FIG. 2B, the front side surface 2a and the rear side surface 2b of the strain generation portion 5 are asymmetrically deformed outward. This is because the front side surface 2a of the strain generation portion 5 to which the sensor chip 1 is attached is inhibited from being deformed due to the sensor chip 1 large in rigidity.

Further, when the deformation of the front side surface 2a and the rear side surface 2b of the strain generation portion 5 are symmetrical with each other, as illustrated in FIG. 3A, a position of a load point (a point at which the load is applied) does not deviate from a center of an upper surface of the load portion 3. On the contrary, when the deformation of the front side surface 2a and the rear side surface 2b of the strain generation portion 5 is asymmetrical with each other, as illustrated in FIG. 3B, the position of the load point deviates from the center of the upper surface of the load portion 3. When the position of the load point deviates from the center of the upper surface of the load portion 3, a shear strain measured by the sensor chip 1 is changed. That is, in this structure, the load and the shear strain generated in the load have a nonlinear relationship, and a load estimation precision of the load cell is reduced.

### (2) Second Problem

Subsequently, a second problem will be described with reference to FIGS. 4 and 5. FIG. 4 is a side view illustrating a main portion of a front side surface of the load cell, which illustrates the load cell in which a lower surface (bottom surface) of the fixed pedestal portion is completely held, and a load is applied to the center of the upper surface of the load portion. A stress analysis when the load is applied to the load cell illustrated in FIG. 4 is implemented by a finite element method (FEM). FIG. 5 is a graph illustrating the shear strain. The shear strain illustrated in FIG. 5 is a shear strain in a direction from a point C on a lower surface toward a point D on an upper surface along a front side surface of the strain generation portion illustrated in FIG. 4.

As illustrated in FIG. 5, the shear strain generated in the vicinity of a center portion between a lower end (the point C on the lower surface of the strain generation portion 5) and an upper end (the point D on the upper surface of the strain generation portion 5) of the front side surface 2a of the strain generation portion 5 is larger than the shear strain generated on the lower end of the front side surface 2a (the point C on the lower surface of the strain generation portion 5) and the upper end of the front side surface 2a (the point D on the upper surface of the strain generation portion 5) of the strain generation portion 5. Further, a variation of the shear strain is small and stable. Conversely, the shear strain generated on the lower end of the front side surface 2a (the point C on the lower surface of the strain generation portion 5) and the upper end of the front side surface 2a (the point D on the upper surface of the strain generation portion 5) of the strain generation portion 5 is smaller than the shear strain generated in the vicinity of the center portion between the lower end (the point C on the lower surface of the strain generation portion 5) and the upper end (the point D on the upper surface of the strain generation portion 5) of the front side surface 2a of the strain generation portion 5. Further, a variation of the shear strain is large.

Incidentally, the above-mentioned JP-A-03-146838 (PTL 2) discloses the load cell that measures the shear strain on the side surface of the strain generation portion, and estimates the load. However, it is conceivable that a portion of the load cell where the shear strain is measured is a region in which a distance from the lower end (point C on the lower surface of the strain generation portion 5) of the front side surface 2a of the strain generation portion 5 is 1.25 to 3.75mm (about half of a distance from the lower end (the lower end (point C on the lower surface of the strain generation portion 5) to the upper end (point D on the upper surface of the strain generation portion 5) with reference to FIGS. 4 and 5.

As illustrated in FIG. 5, because the shear strain measured on both ends of the above region (region A illustrated in FIG. 5) is smaller than the shear strain measured in the center portion of the above region, the load estimation precision of the load cell is reduced. Further, because both ends of the above region are also larger in the variation of the shear strain, the generated shear strain largely fluctuates depending on a variation in the position at which the sensor chip 1 is attached even if the same load is applied, and the load estimation precision of the load cell is reduced.

### First Embodiment

### «Components of Load Cell»

Components of a load cell according to a first embodiment will be described with reference to FIGS. 1 and 2B described above and FIGS. 6, 7. FIG. 6A is a top view illustrating a main portion of a top surface of the load cell. FIG. 6B is a side view illustrating a main portion of the front side surface of the load cell. Specifically, FIG. 6B is a side view illustrating a main portion of one side surface (front side surface) of the load cell to which the semiconductor strain sensor is attached, which exemplifies the load cell when the semiconductor strain sensor is attached to the strain generation portion to completely hold a lower surface (bottom surface) of the fixed pedestal portion, and a load is applied to the center of the upper surface of the load portion. FIG. 7 is a plan view schematically illustrating a main portion of a configuration of the semiconductor strain sensor attached to a front side surface of the load cell, and a configuration of a neighborhood to the semiconductor strain sensor. An upper surface of the sensor chip is covered with a sealing resin. FIGS. 6 and 7 illustrate an internal structure going through the sealing resin for illustration of the internal structure through the sealing resin.

As illustrated in FIG. 6, the load cell according to the first embodiment mainly includes the sensor chip (semiconductor strain sensor) 1, a flexible wiring board 8 that is electrically connected to the sensor chip 1, an S-shaped member 2 over which the sensor chip 1 is mounted through a joint material, and a sealing resin 9 that seals an upper surface and a side surface of the sensor chip 1.

### <Sensor Chip 1>

The sensor chip 1 includes a semiconductor substrate having a front surface (first main surface, element formation surface), and a rear surface (second main surface) opposite to the front surface. The semiconductor substrate is, for example, a silicon substrate made of silicon (Si) single crystal. A metal film is formed on the rear surface of the semiconductor substrate, and covers the rear surface. The metal film is formed of, for example, a laminated film (metal laminated film) in which chromium (Cr), nickel (Ni), and gold (Au) are deposited on each other from the rear surface side of the semiconductor substrate in the stated order. Those films can be formed through, for example, a sputtering technique. The rear surface of the semiconductor substrate is covered with the metal film, thereby being capable of improving a joint strength between the sensor chip 1 and the joint material of metal such as solder.

Also, as illustrated in FIG. 7, a planar shape of the sensor chip 1 is a rectangular shape (rectangle), for example, a square which is about 2mm to 3mm in length of each side.

Also, the sensor chip 1 includes plural (four in the first embodiment) resistive elements (piezoresistive elements) 11 in a sensor detection region 10 located in a center portion of the front surface side of the semiconductor substrate. Also, an input/output circuit region is formed on the front surface side of the semiconductor substrate in a periphery of the sensor chip 1. The input/output circuit region includes plural electrodes (pads, electrode pads) 12 that are electrically connected to the four resistive elements 11.

The four resistive elements 11 are formed by impurity diffusion regions in which the front surface of the semiconductor substrate having a (100) plane is doped with impurities, and the impurities are diffused. Also, each of the four resistive elements 11 has a rectangular shape (rectangle) with two opposite sides extending in a longitudinal direction and two opposite sides extending in a lateral direction.

The sensor chip 1 is formed with a Wheatstone bridge circuit (detector circuit) that electrically connects the four resistive elements 11 to each other. The Wheatstone bridge circuit measures a resistance change of the resistive elements 11 attributable to a piezoresistive effect to detect the shear strain. Also, plural terminals of the Wheatstone bridge circuit are connected to the plural electrodes 12 through plural lines 13. The plural electrodes 12 form input/output terminals of the sensor chip 1 including, for example, a terminal for applying a power potential (first power potential: Vcc) to the sensor chip 1, a terminal for applying a reference potential (second power potential: GND), and a terminal for outputting a detection signal.

Longitudinal directions of the four resistive elements 11 configuring the Wheatstone bridge circuit each have 45° with respect to the load applying direction (load direction). That is, when the semiconductor substrate of the sensor chip 1 is formed of, for example, a silicon substrate made of silicon single crystal, the four resistive elements 11 are arranged so that the respective longitudinal directions of the four resistive elements 11 match a <110> direction of the semiconductor substrate having the (100) plane.

For example, as illustrated in FIG. 7, in the semiconductor substrate having an n-type conductivity provided in the sensor chip 1, four p-type diffusion regions (impurity diffusion region in which the front surface of the semiconductor substrate is doped with impurities of the p-type conductive type, and the impurities are diffused) are formed so that a current flows along a crystal orientation of the <110> direction of the silicon single crystal. Also, the Wheatstone bridge circuit is configured so that the longitudinal directions of two p-type diffusion regions and the longitudinal directions of the other two p-type diffusion regions among the four p-type diffusion regions are perpendicular to each other.

In the sensor chip 1 in which the respective longitudinal directions of the four resistive elements 11 configuring the Wheatstone bridge circuit match the <110> direction of the semiconductor substrate having the (100) plane, a difference between a strain in an X-direction having an angle of +45° to the load applying direction, and a strain in a Y-direction having an angle of -45° to the load applying direction can be output.

In this way, a measuring system that outputs the difference between the strain in the X-direction and the strain in the Y-direction is advantageous from the viewpoint of reducing an influence of a thermal strain applied to the sensor chip 1. That is, because the sensor chip 1 is joined to plural members (the joint material and the S-shaped member 2 in FIG. 6), if a measurement environment temperature changes, the thermal strain caused by a difference in linear expansion coefficient between the respective members is generated. Because the thermal strain is a noise component different from the shear strain to be measured, it is preferable to reduce an influence of the thermal strain.

If the planar shape of the sensor chip 1 is a square, the influence of the thermal strain in the X-direction and the Y-direction is comparable to each other. In this example, because the shear strain generated in the strain generation portion 5 is proportional to the difference between the strain in the X-direction and the strain in the Y-direction, the strain attributable to the thermal strain is canceled, and the shear strain to be measured can be selectively detected.

That is, since the influence of the thermal strain can be reduced with the use of the sensor chip 1, the variation in the shear strain caused by a change in the measurement environment temperature can be reduced. Also, since the respective members such as the resistive elements 11, the electrodes 12, or the lines 13 configuring the sensor chip 1 are formed with the application of a manufacturing technique of a semiconductor device, miniaturization is easy. Also, a manufacturing efficiency can be improved, and a manufacturing cost can be reduced.

<S-shaped Member 2>

As illustrated in FIG. 1 described above, the member 2 on which the sensor chip 1 is mounted includes the load portion (load receiving portion) 3 for receiving the load, a fixed pedestal portion (mounting pedestal portion) 4 for fixing a base 6, and a strain generation portion (sensing portion) 5 that is arranged between the load portion 3 and the fixed pedestal portion 4 so as to be spaced apart from the load portion 3 and the fixed pedestal portion 4, and deformed when receiving the load.

One end of the load portion 3 and one end of the strain generation portion 5 are connected to each other at a first connection portion 18A, and the other end of the strain generation portion 5 opposite to one end of the strain generation portion 5 and one end of the fixed pedestal portion 4 are connected to each other at a second connection portion 18B. When the member 2 is viewed from the front side surface (first side surface) 2a on which the sensor chip 1 is mounted, or the rear side surface (second side surface) 2b opposite to the front side surface, the member 2 is formed into an S-shape.

Hence, a gap (notch portion) 2e between the load portion 3 and the strain generation portion 5 is not opened on one end (for example, an end on a right side surface 2d side) of the strain generation portion 5 because the first connection portion 18A is formed, but is opened on the ends in the other three directions (for example, the respective ends on the front side surface 2a side, the rear side surface 2b side, and a left side surface 2c side). Also, a gap (notch portion) 2f between the strain generation portion 5 and the fixed pedestal portion 4 is not opened on the other end (for example, an end on the left side surface 2c side) of the strain generation portion 5 because the second connection portion 18B is formed, but is opened on the ends in the other three directions (for example, the respective ends on the front side surface 2a side, the rear side surface 2b side, and the right side surface 2d side). The load portion 3, the first connection portion 18A, the strain generation portion 5, the second connection portion 18B, and the fixed pedestal portion 4 are formed integrally.

Also, the load portion 3 is shaped into a block having a given thickness, and the load portion 3 per se has a rigidity as high as the load portion 3 is not deformed when receiving a force within at least a rated measurement range. Also, the fixed pedestal portion 3 is shaped into a block having a given thickness, and the fixed pedestal portion per se is not deformed. Likewise, the strain generation portion 5 is shaped into a block having a given thickness, and deformed by applying a force to the load portion 3, and the amount of deformation is measured by the sensor chip 1, and converted into the shear strain.

The fixed pedestal portion 4 is held to a base 6 by, for example, screwing. Because a load point is provided on one point on the upper surface of the load portion 3, as illustrated in FIG. 6A, a recess 14 is formed in a part of the upper surface of the load portion 3. This is because assuming that a shape of a leading end of the member to which the load is applied is spherical, a positional displacement of the load point is prevented with the provision of the recess 14 in the load portion 3.

Also, it is preferable that a leading portion of the gap (notch) 2e between the load portion 3 and strain generation portion 5, which comes in contact with the first connection portion 18A, and a leading portion of the gap (notch) between the fixed pedestal portion 4 and strain generation portion 5, which comes in contact with the second connection portion are each formed with a curved surface having a curvature of a radius R as illustrated in FIG. 6B. A stress is concentrated on the leading portion of the first connection portion 18A of the gap (notch) 2e, and the leading portion of the second connection portion 18B of the gap (notch) 2f. However, the stress is reduced with the provision of the curved surface, and the reliability can be ensured.

A material of the S-shaped member 2 is not particularly restricted, but as will be described later, it is preferable that the joint material is a metal joint material such as solder. Hence, it is preferable that at least the front surface of the strain generation portion 5 forming the chip mounting surface (front side surface 2a) is made of a metal material from the viewpoint of improving the connection reliability with the joint material. Also, it is preferable that the overall S-shaped member 2 is made of a metal material from the viewpoint of suppressing the destruction of the S-shaped member 2. In the first embodiment, the overall S-shaped member 2 is made of, for example, iron (Fe), cupper (Cu), aluminum (Al), so-called stainless steel (iron alloy containing chromium elements), or so-called duralumin (aluminum alloy).

### <Joint Material>

As illustrated in FIG. 2B described above, the sensor chip 1 is attached to one side surface (front side surface 2a) of the strain generation portion 5 through a joint material 7. The joint material 7 is disposed to cover the overall rear surface of the sensor chip 1, and a part of the side surface of the sensor chip 1. In other words, a peripheral portion of the joint material 7 spreads to an outside of the side surface of the sensor chip 1, and forms a filet. The joint material 7 is not limited to the metal material, but can be made of a resin adhesive such as a thermosetting resin from the viewpoint of adhesively fixing the sensor chip 1 and the S-shaped member 2. However, it is preferable that the joint material 7 is made of a metal material from the viewpoint of improving the measurement precision of the sensor chip 1.

### <Flexible Wiring 8>

As illustrated in FIGS. 6 and 7, the front side surface 2a of the strain generation portion 5 of the S-shaped member 2 is fixed with the flexible wiring 8 having plural lines 15 electrically connected to the plural electrodes 12 of the sensor chip 1. The flexible wiring 8 is configured so that the plural lines 15 made of a metal material are sealed within a resin film, and parts of the plural lines 15 are exposed in opening portions 16 formed in parts of the resin film. The exposed portions form the plural terminals.

Also, the plural electrodes 12 of the sensor chip 1 and the plural terminals (wiring portion) of the flexible wiring 8 are electrically connected to each other through plural respective conductive members 17. The conductive members 17 are formed of gold lines (Au lines) that are about 10 µm to 200 µm in diameter, and sealed with the sealing resin 9. The conductive members 17 is covered with the sealing resin 9, thereby being capable of preventing short-circuiting between the adjacent conductive members 17. Also, although not shown, one end of the flexible wiring 8 is fixed to the S-shaped member 2, and the other end of the flexible wiring 8 is formed with, for example, a connector, which is electrically connected with, for example, a control circuit that controls strain measurement.

FIGS. 6 and 7 exemplify a configuration the plural terminals formed by exposing the parts of the plural lines 15 from the opening portions 16, and the plural conductive members 17 form the wiring portion. However, the wiring portion is not limited to the configuration illustrated in FIGS. 6 and 7 if an input/output current can be transmitted between the sensor chip 1 and an external equipment not shown.

### «Structure of Load Cell»

A structure of the load cell according to the first embodiment will be described with reference to FIGS. 8 to 10.

First, an attaching position of the sensor chip will be described with reference to FIG. 8. FIG. 8 is a graph illustrating a shear strain distribution of the front side surface of the strain generation portion obtained by an FEM analysis.

As illustrated in FIG. 8, the shear strain is obtained at plural positions (strain evaluation positions) of the front side surface 2a of the strain generation portion 5 from the left side surface 2c to the right side surface 2d.

Among the strain evaluation positions, in the front side surface 2a (position indicated by a symbol S1 in FIG. 8) of the strain generation portion 5 located under the leading portion of the gap (notch) 2e between the load portion 3 and strain generation portion 5, and the front side surface 2a (position indicated by a symbol S2 in FIG. 8) of the strain generation portion 5 located above the leading portion of the gap (notch) 2f between the fixed pedestal portion 4 and strain generation portion 5, the shear strain rapidly changes. On the contrary, among the strain evaluation positions, in the front side surface 2a (position indicated by symbol S3 in FIG. 8) in the vicinity of the center of the strain generation portion 5, the shear strain is kept substantially constant. Therefore, if the sensor chip 1 is attached to the center portion of the front side surface 2a of the strain generation portion 5, even if the attaching position of the sensor chip 1 is slightly displaced, the generated shear strain does not largely change. As a result, the load applied to the load cell can be detected with high precision and high sensitivity.

Subsequently, a description will be given of a relationship between the crystal orientation of the semiconductor substrate configuring the sensor chip, and the load direction with reference to FIG. 9. FIG. 9 is a cross-sectional view (cross-sectional view along a direction from the front side surface toward the rear side surface) illustrating a main portion of the strain generation portion of the load cell in which the semiconductor strain sensor is attached to one side surface (front side surface) of the strain generation portion.

When the semiconductor substrate of the sensor chip 1 is formed of a silicon substrate made of silicon single crystal, the sensor chip 1 is attached to the strain generation portion 5 so that the load direction becomes parallel to the <100> direction of the semiconductor substrate. A silicon elastic modulus is different depending on the crystal orientation, and the silicon elastic modulus when the crystal orientation is <100> is about 130GPa. On the other hand, the silicon elastic modulus in the other crystal orientations is about 170GPa, and the silicon elastic modulus becomes larger than that when the crystal orientation is <100>.

Incidentally, in order to make the protruded shape of the front side surface 2a to which the sensor chip 1 is attached toward the outside, and the protruded shape of the rear side surface 2b to which the sensor chip 1 is not attached toward the outside symmetrical with each other, it is desirable to reduce the rigidity of the sensor chip 1 as much as possible. In the first embodiment, the load direction is arranged in parallel to the <100> direction of the semiconductor substrate (silicon single crystal), as a result of which the elastic modulus of the semiconductor substrate in the crystal orientation of the load direction is reduced, and the rigidity of the sensor chip 1 can be reduced.

Subsequently, the position of the load point will be described with reference to FIGS. 10 and 11.
FIG. 10 is a side view illustrating a main portion of the front side surface of the load cell. Specifically, FIG. 10 is a side view illustrating a main portion of one side surface (front side surface) of the load cell to which the semiconductor strain sensor is attached, which exemplifies the load cell when the semiconductor strain sensor is attached to the strain generation portion to completely hold a lower surface (bottom surface) of the fixed pedestal portion, and a load is applied to a position deviated from the center of the upper surface of the load portion. FIG. 11 is a graph illustrating a relationship between a position of the load point and a shear strain obtained in the semiconductor strain sensor that is attached to the center portion of one side surface (front side surface) of the strain generation portion.

As illustrated in FIG. 10, the load point is disposed at a position deviated from the center of the upper surface of the load portion 3 toward a direction of the other end where the first connection portion 18A is not formed, opposite to one end where the first connection portion 18A that connects the load portion 3 and the strain generation portion 5 to each other is formed.

As illustrated in FIG. 11, when the load point is present on the other end side (opening side, free end side) where the first connection portion 18A is not formed with respect to the center portion of the front side surface 2a of the strain generation portion 5 which is the strain evaluation point, the generated shear strain is kept substantially constant. On the other hand, when the load point is present on one end side (opening side) where the first connection portion 18A is formed with respect to the center portion of the front side surface 2a of the strain generation portion 5 which is the strain evaluation point, the generated shear strain increases as the load position moves toward the closed side.

It is conceivable that the load point is slightly varied when using the load cell. In order to ensure the precision of the load cell, it is necessary that the generated shear strain hardly changes even if the load point is slightly varied. Hence, when the load point is displaced toward the other end side (opening side, free end side) where the first connection portion 18A is not formed with respect to the center of the upper surface of the load portion 3. With the above configuration, the load estimation precision can be improved.

When the load point is extremely displaced toward the other end side (opening side, free end side) where the first connection portion 18A is not formed with respect to the center of the upper surface of the load portion 3, a bending moment generated in a boundary portion (root portion) between the load portion 3 and the first connection portion 18A increases. As a result, the boundary portion (root portion) may be destroyed. Also, in order to prevent the boundary portion (root portion) from being destroyed, there is a need to set an allowable load value to be smaller. Therefore, it is not desirable that the load point is extremely set to the other end side (opening side, free end side) where the first connection portion 18A is not formed with respect to the center on the upper surface of the load portion 3.

Hereinafter, the main advantages obtained by the first embodiment are summarized.
(1) Since the sensor chip 1 is attached to the center portion of the front side surface 2a of the strain generation portion 5, even if the attaching position of the sensor chip 1 is slightly displaced, the variation of the shear strain is small, and the large shear strain can be obtained.
(2) The Wheatstone bridge circuit that electrically connects plural (for example, four) resistive elements 11 to each other is formed in the sensor chip 1, and the plural resistive elements 11 are arranged so that the respective longitudinal directions of the plural resistive elements 11 match the <110> direction of the semiconductor substrate (silicon single crystal) having the (100) plane. With the above configuration, the influence of the thermal strain is reduced, and a variation in the shear strain attributable to a change in the measurement environment temperature can be reduced.
(3) The sensor chip 1 is attached to the center portion of the front side surface 2a of the strain generation portion 5 so that the load direction becomes parallel to the <100> direction of the semiconductor substrate (silicon single crystal), and the rigidity of the sensor chip 1 is reduced. With the above configuration, asymmetry between the protruded shape of the front side surface 2a to which the sensor chip 1 is attached toward the outside, and the protruded shape of the rear side surface 2b to which the sensor chip 1 is not attached toward the outside can be reduced. As a result, the position of the load point can be prevented from being displaced.
(4) The position of the load point is displaced from the center of the upper surface of the load portion 3 toward the direction of the other end where the first connection portion 18A is not formed, opposite to one end where the first connection portion 18A that connects the load portion 3 and the strain generation portion 5 to each other is formed. With the above configuration, even if the position of the load point is displaced, the variation of the shear strain can be reduced.

From the above viewpoint, the load estimation precision of the load cell can be inhibited from being reduced.

### Second Embodiment

In a second embodiment, the deformation of the front side surface 2a of the strain generation portion 5 is made symmetrical with the deformation of the rear side surface 2b thereof. In the first embodiment, the sensor chip 1 is attached to only the front side surface 2a of the strain generation portion 5 whereas in the second embodiment, the respective sensor chips (sensor chips indicated by symbols 1a and 1b in FIGS. 12A and 12B, which will be described later, respectively) are attached to the front side surface 2a and the rear side surface 2b of the strain generation portion 5. With this configuration, the protruded shape of the front side surface 2a of the strain generation portion 5 toward the outside is made symmetrical with the protruded shape of the rear side surface 2b of the strain generation portion 5 toward the outside.

### «Components of Load Cell»

FIG. 12A is a side view illustrating a main portion of the front side surface of the load cell to which the semiconductor strain sensor is attached, and FIG. 12B is a side view illustrating a main portion of the rear side surface of the load cell to which the semiconductor strain sensor is attached.

Sensor chips 1a, 1b which are components of the load cell, the S-shaped member 2, flexible wiring boards 8a, 8b, and sealing resins 9a, 9b are identical with the sensor chip 1, the S-shaped member 2, the flexible wiring board 8, and the sealing resin 9 described in the first embodiment.

### «Structure of Load Cell»

As illustrated in FIGS. 12A and 12B, the sensor chip 1a is attached to the front side surface 2a of the strain generation portion 5 of the load cell, and likewise the sensor chip 1b is attached to the rear side surface 2b. As illustrated in FIG. 2B described above, when the sensor chip 1 is attached to only the front side surface 2a of the strain generation portion 5 of the load cell, the front side surface 2a and the rear side surface 2b of the strain generation portion 5 are asymmetrically deformed outward. However, in the load cell according to the second embodiment, because the sensor chips 1a and 1b are attached to both side surfaces of the front side surface 2a and the rear side surface 2b of the strain generation portion 5, deformation states of the front side surface 2a and the rear side surface 2b of the strain generation portion 5 when applying a force to the load portion 3 are identical with each other, and the asymmetrical deformation is not generated. As a result, the load estimation precision can be ensured.

In the load cell according to the second embodiment, the shear strain when applying the load is a mean value of an output value of the sensor chip 1a attached to the front side surface 2a of the strain generation portion 5, and an output value of the sensor chip 1b attached to the rear side surface 2b of the strain generation portion 5. When the sensor chip 1a attached to the front side surface 2a of the strain generation portion 5, and the sensor chip 1b attached to the rear side surface 2b of the strain generation portion 5 are attached in the same direction, signs of the shear strain are opposite to each other. That is, when the output value of the sensor chip 1a attached to the front side surface 2a is positive, the output value of the sensor chip 1b attached to the rear side surface 2b becomes negative. Hence, when the mean value is obtained, there is a need to derive the mean value with the use of a value obtained by multiplying the output value of the sensor chip 1b attached to the rear side surface 2b by -1.

FIG. 13 is a perspective view of the load cell.

As illustrated in FIG. 13, it is conceivable that on the upper surface of the load portion 3, the load point moves from an intermediate point between the front side surface 2a and the rear side surface 2b toward the front side surface 2a side, or toward the rear side surface 2b side. For example, when the load point is displaced toward the front side surface 2a side on the upper surface of the load portion 3, the output value of the sensor chip 1a attached to the front side surface 2a increases, and the output value of the sensor chip 1b attached to the rear side surface 2b decreases. However, in the load cell according to the second embodiment, a mean value of the output value of the sensor chip 1a attached to the front side surface 2a of the strain generation portion 5, and the output value of the sensor chip 1b attached to the rear side surface 2b is used. Therefore, even if the load point is varied, because the mean value hardly changes, there is advantageous in that the load estimation precision of the load cell is not reduced.

### Third Embodiment

In a third embodiment, a reduction in the load estimation precision caused by the attaching position of the semiconductor strain sensor can be suppressed.

### «Components of Load Cell»

A sensor chip 1, an S-shaped member 2, a flexible wiring board 8, and a sealing resin 9 which are components of a load cell are identical with those in the above first embodiment.

### «Structure of Load Cell»

FIG. 14A is a side view illustrating a main portion of a front side surface of a load cell. Specifically, FIG. 14A is a side view illustrating a main portion of one side surface (front side surface) of the load cell to which a semiconductor strain sensor is attached, which exemplifies the load cell when the semiconductor strain sensor is attached to the strain generation portion to completely hold a lower surface (bottom surface) of a fixed pedestal portion, and a load is applied to a center of an upper surface of a load portion. FIG. 14B is a plan view schematically illustrating a main portion of a configuration of the semiconductor strain sensor attached to a front side surface of the load cell, and a configuration of a neighborhood to the semiconductor strain sensor.

As illustrated in FIGS. 14A and 14B, the sensor chip 1 is attached to a center portion of a lower end (for example, point C on the lower surface of the strain generation portion 5 in FIG. 4 described above), and an upper end (for example, point D on the upper surface of the strain generation portion 5 in FIG. 4 described above) of the front side surface 2a of the strain generation portion 5 of the load cell. Further, the sensor chip 1 is formed with the plural resistive elements 11, but a length (length indicated by a symbol L1 in FIG. 14B) of a region in which those plural resistive elements 11 are arranged in the load direction is equal to or lower than 1/4 of a length (length indicated by a symbol L2 in FIG. 14A) from the lower end to the upper end of the strain generation portion 5.

As described with reference to FIG. 5 described above, the shear strain generated in the vicinity of the center portion between the lower end (point C on the lower surface of the strain generation portion 5) and the upper end (point D on the upper surface of the strain generation portion 5) of the front side surface 2a of the strain generation portion 5 is larger than the shear strain generated in the lower end (point C on the lower surface of the strain generation portion 5) of the front side surface 2a of the strain generation portion 5, and the upper end (point D on the upper surface of the strain generation portion 5) of the front side surface 2a, and a variation of the shear strain is small and stable. On the contrary, the shear strain generated in the lower end (point C on the lower surface of the strain generation portion 5) of the front side surface 2a of the strain generation portion 5, and the upper end (point D on the upper surface of the strain generation portion 5) of the front side surface 2a is smaller than the shear strain generated in the vicinity of the center portion between the lower end (point C on the lower surface of the strain generation portion 5), and the upper end (point D on the upper surface of the strain generation portion 5) of the front side surface 2a of the strain generation portion 5, and a variation of the shear strain is large.

Therefore, the sensor chip 1 is attached to a region (for example, region B illustrated in FIG. 5 described above) of 1/4 of a length (L2) from the lower end to the upper end of the strain generation portion 5 with the center portion between the lower end and the upper end of the front side surface 2a of the strain generation portion 5 of the load cell as a center. As a result, the reduction in the load estimation precision of the load cell can be suppressed.

The invention made by the present inventors has been described specifically on the basis of the embodiments, but the invention is not limited to the above embodiments, and can be variously changed without departing from the spirit of the invention.

For example, in this embodiment, the plural resistive elements are configured by the p-type diffusion regions formed by doping the semiconductor substrate having the n-type conductivity with impurities having the p-type conductivity. However, the invention is not limited to this configuration.

### Industrial Applicability

The invention can be extensively used in the mechanical quantity measuring device.

### Reference Sign List

- 1, 1a, 1b,: sensor chip (semiconductor strain sensor)
- 2,: member
- 2a,: front side surface (first side surface)
- 2b,: rear side surface (second side surface)
- 2c,: left side surface
- 2d,: right side surface
- 2e, 2f,: gap (notch)
- 3,: load portion (load receiving portion)
- 4,: fixed pedestal portion (mounting pedestal portion)
- 5,: strain generation portion (sensing portion)
- 6,: base
- 7,: joint material
- 8, 8a, 8b,: flexible wiring board
- 9, 9a, 9b,: sealing resin
- 10,: sensor detection region
- 11,: resistive element (piezoresistive element)
- 12,: electrode (pad, electrode pad)
- 13,: line
- 14,: recess
- 15,: line
- 16,: opening portion
- 17,: conductive member
- 18A,: first connection portion
- 18B,: second connection portion

## Claims

1. A mechanical quantity measuring device having a load cell formed of a sensor chip and a member to which the sensor chip is attached,
wherein the sensor chip includes a semiconductor substrate of a first conductivity type having a front surface and a rear surface opposite to the front surface, a plurality of resistive elements formed on the front surface side of the semiconductor substrate, and a plurality of electrodes formed on a peripheral portion of the front surface side of the semiconductor substrate,
wherein the member includes a load portion having an upper surface to which a load is applied, a fixed pedestal portion, a strain generation portion arranged between the load portion and the fixed pedestal portion so as to be spaced apart from the load portion and the fixed pedestal portion, a first connection portion that connects one end of the load portion to one end of the strain generation portion, and a second connection portion that connects the other end of the strain generation portion opposite to one end of the strain generation portion to one end of the fixed pedestal portion,
wherein the sensor chip is attached to a center portion of a first side surface of the strain generation portion of the member through a joint material so that the rear surface of the semiconductor substrate is joined thereto, and
wherein the semiconductor substrate is made of silicon single crystal, and a <100> direction of the silicon single crystal is parallel to a load direction.

2. The mechanical quantity measuring device according to claim 1,
wherein the plurality of resistive elements each have a rectangular shape having two sides opposite to each other, and arrayed in a longitudinal direction, and two sides opposite to each other, and arrayed in a lateral direction orthogonal to the longitudinal direction in a plan view, and
wherein the respective longitudinal directions of the plurality of resistive elements have an angle of 45° with respect to a load direction.

3. The mechanical quantity measuring device according to claim 1,
wherein the plurality of resistive elements each includes an impurity diffusion region formed in the front surface side of the semiconductor substrate, into which impurities of a second conductivity type opposite to the first conductivity type are introduced,
wherein the impurity diffusion region has a rectangular shape having two sides opposite to each other, and arrayed in a longitudinal direction, and two sides opposite to each other, and arrayed in a lateral direction orthogonal to the longitudinal direction in a plan view, and
wherein the respective longitudinal directions of the impurity diffusion region have an angle of 45° with respect to a load direction.

4. The mechanical quantity measuring device according to claim 3,
wherein the plurality of resistive elements includes four resistive elements configuring a bridge circuit, and
wherein the four resistive elements are arranged so that the longitudinal direction of the impurity diffusion regions of two of the four resistive elements becomes perpendicular to the longitudinal direction of the impurity diffusion regions of the other two resistive elements.

5. The mechanical quantity measuring device according to claim 1,
wherein the plurality of resistive elements each have a rectangular shape having two sides opposite to each other, and arrayed in a longitudinal direction, and two sides opposite to each other, and arrayed in a lateral direction orthogonal to the longitudinal direction in a plan view, and
wherein the respective lateral directions of the plurality of resistive elements match a <110> direction of the silicon single crystal.

6. The mechanical quantity measuring device according to claim 1,
wherein the plurality of resistive elements each includes an impurity diffusion region formed in the front surface side of the semiconductor substrate, into which impurities of a second conductivity type opposite to the first conductivity type are introduced,
wherein the impurity diffusion region has a rectangular shape having two sides opposite to each other, and arrayed in a longitudinal direction, and two sides opposite to each other, and arrayed in a lateral direction orthogonal to the longitudinal direction in a plan view, and
wherein the respective longitudinal directions of the impurity diffusion region match a <110> direction of the silicon single crystal.

7. The mechanical quantity measuring device according to claim 6,
wherein the plurality of resistive elements includes four resistive elements configuring a bridge circuit, and
wherein the four resistive elements are arranged so that the longitudinal direction of the impurity diffusion regions of two of the four resistive elements becomes perpendicular to the longitudinal direction of the impurity diffusion regions of the other two resistive elements.

8. The mechanical quantity measuring device according to claim 1,
wherein the upper surface of the load portion is provided with a recess for identifying a load point, and a position of the recess is deviated from a center of the upper surface of the load portion toward a direction opposite to the one end of the load portion on which the first connection portion is formed.

9. The mechanical quantity measuring device according to claim 1,
wherein the sensor chip is also attached to a center portion of a second side surface of the strain generation portion of the member opposite to the first side surface through a joint material so that rear surface of the semiconductor substrate is joined thereto.

10. The mechanical quantity measuring device according to claim 1,
wherein a length of a region in which the plurality of resistive elements is formed in the load direction is equal to or lower than 1/4 of a length from an upper end of the strain generation portion to a lower end thereof along the first side surface.

11. The mechanical quantity measuring device according to claim 1,
wherein the rear surface of the semiconductor substrate is covered with a metal laminated film in which chromium, nickel, and gold are laminated on each other from the rear surface side in the stated order, and the joint material is solder.

12. The mechanical quantity measuring device according to claim 1,
wherein an upper surface and a side surface of the sensor chip are covered with a sealing resin so as to cover the plurality of resistive elements and the plurality of electrodes.
